Europäisches Patentamt

European Patent Office

Office européen des brevets

(19)

(11) Veröffentlichungsnummer: **0 330 621**
**A2**

(12) **EUROPÄISCHE PATENTANMELDUNG**

(21) Anmeldenummer: **89810136.5**

(22) Anmeldetag: **22.02.89**

(51) Int. Cl.⁴: **H 02 H 9/02**
**H 01 H 9/54**

(30) Priorität: **24.02.88 DE 3805625**

(43) Veröffentlichungstag der Anmeldung:
**30.08.89 Patentblatt 89/35**

(84) Benannte Vertragsstaaten:
**AT CH DE FR GB IT LI SE**

(71) Anmelder: **Maier, Franz Dipl.-Ing. Dr. techn.**
**Winzerstrasse 42 B**
**CH-5430 Wettingen (CH)**

(72) Erfinder: **Maier, Franz Dipl.-Ing. Dr. techn.**
**Winzerstrasse 42 B**
**CH-5430 Wettingen (CH)**

(54) **Strombegrenzungsvorrichtung.**

(57) Die Strombegrenzungsvorrichtung (2) enthält eine Kommutierungsvorrichtung (21), die aus modularen Kommutierungselementen besteht. Ein Kommutierungselement wird durch einen rohrförmigen, isolierten Stromleiter (27) gebildet, der von zwei dauermagnetisch vorgesättigten, ringförmig geschlossenen Eisenkernen (28.1, 28.2) umfaßt wird. Zwischen den Eisenkernen befinden sich für deren Vorsättigung mindestens ein Dauermagnet (29.1) ausreichender Feldstärke, sowie in diametraler Lage dazu ein Rückschluß (30) aus magnetisch leitendem Material.

Fig. 5

Fig. 2

EP 0 330 621 A2

## Beschreibung

### Strombegrenzungsvorrichtung

Bei der Erfindung wird ausgegangen von einer Vorrichtung zum Begrenzen des von einer Stromquelle zu einem Verbraucher fliessenden Stromes nach dem Oberbegriff von Patentanspruch 1.

Solche Strombegrenzungsvorrichtungen können zur Herabsetzung der Abschaltleistung von Schaltern und zur Begrenzung der mechanischen und thermischen Wirkung von Kurzschlußströmen in Netzen der elektrischen Energieübertragung und Verteilung eingesetzt werden. Die mit Rücksicht auf gute Versorgungssicherheit und wirtschaftliche Ausnutzung der Betriebsmittel notwendige zunehmende Vermaschung der Netze bedingt eine Zunahme der Kurzschlußströme. Ihre Begrenzung ist daher geboten.

Eine Strombegrenzungsungsvorrichtung der im Oberbegriff von Patentanspruch 1 angegebenen Art ist etwa aus der Deutschen Offenlegungsschrift DE 3707 309 A1 bekannt. Bei dieser Vorrichtung mit zwei trennbaren Kontakstücken wird durch eine dazu in Reihe liegende Stromableitschaltung der Kurzschlußstrom teilweise auf einen dazu parallelen Stromkreis abgeleitet. Die in dieser Strombegrenzungsvorrichtung verwendeten Stromtransformatoren mit zugehörigen Halbleiterschaltungen bedingen bei höheren Spannungen und Strömen einen erheblichen Aufwand. Die geforderte Spannungsfestigkeit der Halbleiterkomponenten im Sekundärkreis der Stromtransformatoren und die notwendige Stromtragfähigkeit im Lastkreis beeinträchtigen maßgeblich die wirtschaftliche Ausführbarkeit dieser Strombegrenzungsvorrichtung. Die erforderliche Logikschaltung für die Erfassung eines Kurzschlusses und die Sperrung des Transistorkreises bedingt einen zusätzlichen Aufwand und verschlechtert die Betriebssicherheit dieser Strombegrenzungsvorrichtung.

Es ist Aufgabe der vorliegenden Erfindung eine Strombegrenzungsvorrichtung zu schaffen, welche die Nachteile der bekannten vermeidet. Diese neue Strombegrenzungsvorrichtung soll einfach sein und sicher wirken. Ihre wirtschaftliche Ausführbarkeit soll weder durch die Spannung noch durch den Strom beschränkt sein.

Bei der erfindungsgemäßen Strombegrenzungsvorrichtung soll kausal nach einem Kurzschluß und selbsttätig nach Erreichen einer bestimmten Stromschwelle der Spannungsanstieg über der Strombegrenzungsvorrichtung erfolgen, so daß der Fehlerstrom sofort begrenzt wird und die von der Vorrichtung erzeugte Gegenspannung den Kurzschlußstrom auf einen Parallelkreis kommutiert. Dieser enthält einen spannungsabhängigen Widerstand, welcher durch seine Wirkung den Strom begrenzt und schließlich auf Null abbaut. Diese Aufgabe wird durch die im Patentanspruch 1 definierte Erfindung gelöst. Eigenschaften und Vorteile der Erfindung sind nachfolgend anhand von in der Zeichnung dargestellten und die Erfindung nicht beschränkenden Ausführungsbeispielen näher erläutert. Hierbei zeigt

Fig. 1 eine einphasig und stark vereinfacht dargestellte Schaltung eines Energieübertragungssystems mit der erfindungsgemäßen Strombegrenzungsvorrichtung,

Fig. 2 eine Strombegrenzungsvorrichtung mit einem im Stromableitkreis die Schalterauslösung bewirkenden Primärstromauslöser,

Fig. 3 eine Strombegrenzugsvorrichtung mit einem im Stromableitkreis angeordneten, die Schalterauslösung bewirkenden Stromwandler,

Fig. 4 eine Strombegrenzungsvorrichtung mit einem die Begrenzungsspannung erfassenden und die Schalterauslösung bewirkenden Spannungswandler,

Fig. 5 ein dauermagnetisch vorgesättigtes und selbsttätig entsättigbares Kommutierungselement der Kommutierungsvorrichtung (21),

Fig. 6 ein durch zwei Dauermagnete vorgesättigtes und selbsttätig entsättigbares Kommutierungselement der Kommutierungsvorrichtung (21),

Fig. 7 eine Strombegrenzungsvorrichtung in den Strängen eines Drehstromsystems,

Fig. 8 Strombegrenzungsvorrichtungen in den Abzweigen einer Stromverteilungsanlage,

Fig. 9 eine Strombegrenzungsvorrichtung in der Sammelschiene einer Stromverteilungsanlage,

Fig. 10 eine Strombegrenzungsvorrichtung zwischen gekoppelten elektrischen Netzen.

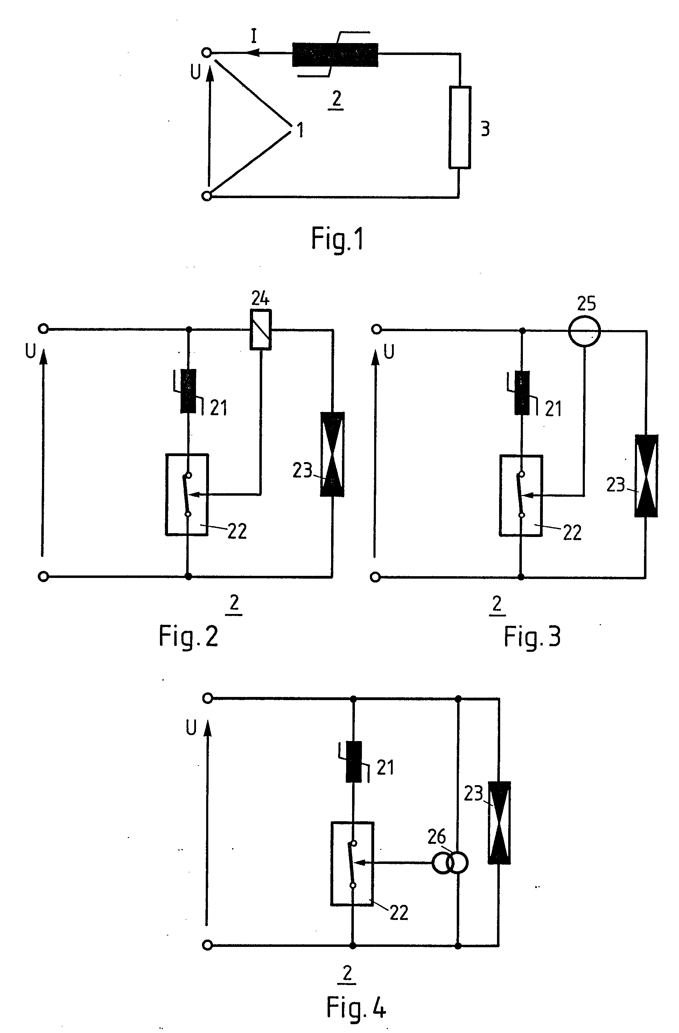

In allen Figuren bezeichnen gleiche Bezugszeichen auch gleich wirkende Teile. Bei der in Fig. 1 angegebenen Schaltung befindet sich zwischen der Stromquelle (1) mit der Spannung $U$ und dem Verbraucher (3) die erfindungsgemäße Strombegrenzungsvorrichtung (2). Sie ist in Fig. 2 mit einem Primärstromauslöser (24) im Stromableitkreis dargestellt. Dieser Primärstromauslöser (24) bewirkt die Auslösung des Schalters (22), sobald der kommutierte Strom im Ableitkreis fließt. Der Zeitpunkt für die Auslösung des Schalters (22) kann auch durch einen gemäß Fig. 3 im Ableitkreis angeordneten Stromwandler bestimmt werden. Schließlich zeigt Fig. 4 einen die Begrenzungsspannung erfassenden Spannungswandler (26), durch welchen der Zeitpunkt für die Auslösung des Schalters (22) bestimmt wird. Durch alle beschriebenen Schaltungen wird sichergestellt, daß die Öffnung des Schalters (22) erst nach der Ableitung des Stromes erfolgen kann.

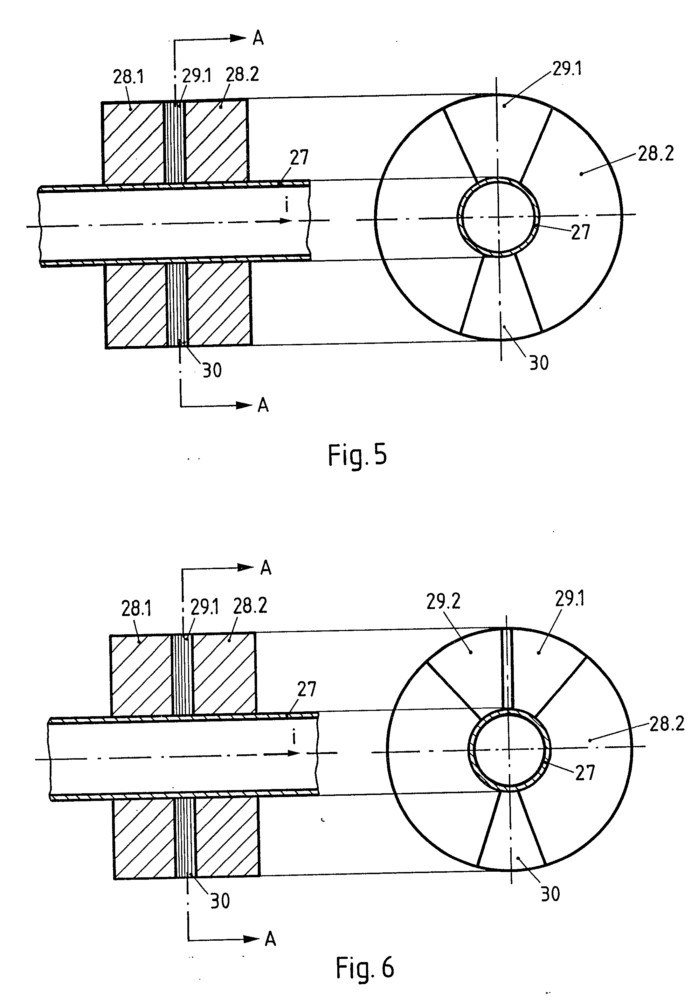

Die Stromableitung wird durch die Kommutierungsvorrichtung (21) mit einer Anzahl modularer Kommutierungselemente gemäß Fig. 5 oder Fig. 6 erreicht. Das Kommutierungselement der Fig. 5 besteht aus zwei ringförmig geschlossenen, dauermagnetisch vorgesättigten Eisenkernen (28.1, 28.2), welche vorzugsweise einen rohrförmigen, isolierten Stromleiter (27) umfassen. Zwischen den Eisenkernen (28.1, 28.2) wird mindestens ein Dauermagnet (29.1) ausreichender Feldstärke angeordnet. Der von diesem Dauermagneten erzeugte Fluß schließt sich über einen vorzugsweise in diametraler Lage angeordneten Rückschluß (30) aus magnetisch leitendem Material. Die gewählte modulare Anordnung der Eisenkerne bewirkt deren Sättigung durch den Dauermagnetfluß, so daß bei normalen Betriebsstrom praktisch keine wirksame Spannung durch den vom fliessenden Strom erregten Fluß induziert werden kann. Mit anwachsendem Strom im Lastkreis erfolgt eine zunehmende Verdrängung des Dauermagnetflusses auf parallele Flußwege mit der Folge steigender Entsättigung. Erreicht der Laststrom einen bestimmten Schwellenwert, so erfolgt selbsttätig vollständige Entsättigung und es wird eine entsprechende Spannung über der Kommutierungsvorrichtung (21) induziert. Diese wirkt der den Kurzschlußstrom treibenden Quellenspannung entgegen und begrenzt den Strom. Durch Anordnung einer genügenden Anzahl solcher modularer Kommutierungselemente, welche den vom Laststrom erzeugten Fluß führen sollen, kann die für die Erzeugung einer impulsförmigen Kommutierungsspannung erforderliche Spannungszeitfläche sichergestellt werden. Die Fig. 6 zeigt ein Kommutierungselement, bei welchen die Vorsättigung der Eisenkerne durch zueinander gegensinnig gepolte Dauermagnete (29.1, 29.2) erreicht wird. Auch dabei erfolgt die Entsättigung durch den im Lastkreis fliessenden Erregerstrom, indem der von diesem Strom erzeugte Fluß ab einer bestimmten Stromschwelle den Dauermagnetfluß auf Parallelwege verdrängt. Wie bereits vorhin erläutert bedingt die bei Entsättigung über der Kommutierungsvorrichtung induzierte Spannung die Kommutierung des Stromes auf den strombegrenzenden Parallelkreis, wobei der mit der Kommutierungsvorrichtung (21) in Reihe liegende Schalter (22) geöffnet wird. Der in den Parallelkreis kommutierte Strom wird durch den spannungsabhängigen Widerstand (23) weiter begrenzt und rasch auf Null abgebaut.

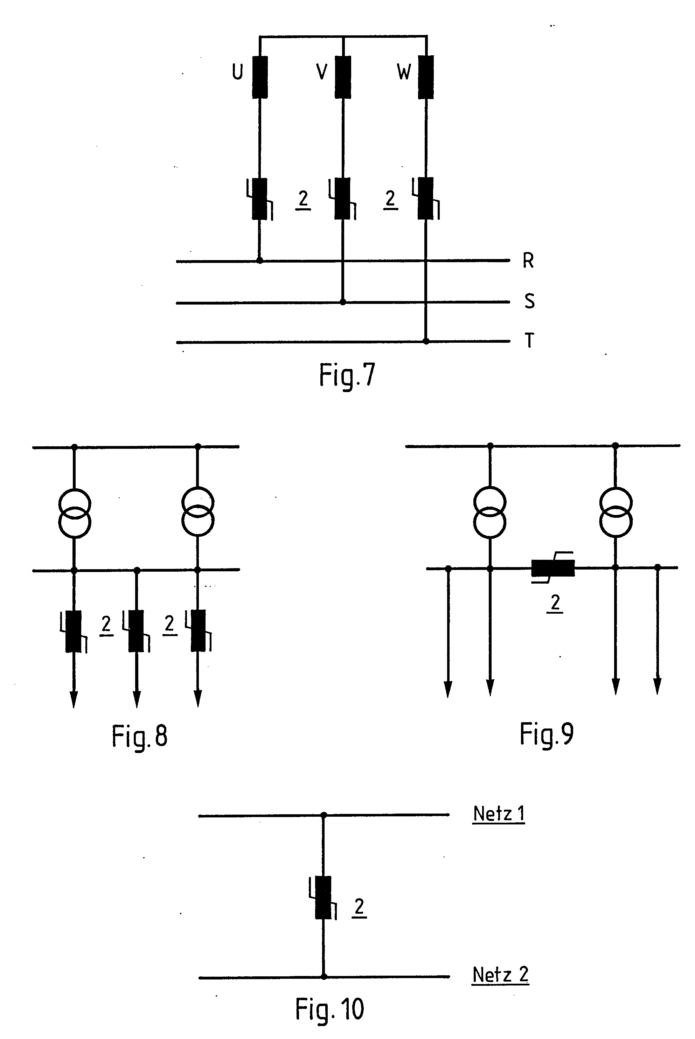

Die Fig. 7 zeigt eine erfindungsgemäße Strombegrenzungsvorrichtung in den Strängen eines Drehstromsystems.

In der Stromverteilungsanlage der Fig. 8 werden die Strombegrenzungsvorrichtungen in den Abzweigen angeordnet. Dabei erfolgt die Strombegrenzung selektiv nur im fehlerbehafteten Abzweig.

Die Fig. 9 stellt die Anordnung einer solchen Strombegrenzungsvorrichtung in der Sammelschiene einer Schaltanlage dar. Dadurch werden im wesentlichen unabhängig gespeiste Anlagenteile gekoppelt. Es wird ein Lastausgleich und die gegenseitige Aushilfsmöglichkeit der Anlagenteile erreicht. Die jeweils vom anderen System eingespeiste Kurzschlußleistung wird begrenzt, so daß die Anlagenteile nicht für die Summenkurzschlußleistung beider Systeme bemessen werden müssen.

Werden Netze gekoppelt, so kann die Strombegrenzungsvorrichtung gemäß Fig. 10 an der Koppelstelle angeordnet werden. Es resultieren entsprechende Vorteile, wie sie bereits bei der Kopplung von Anlageteilen über eine Sammelschiene erwähnt wurden. Schließlich ergibt der positive Einfluß einer schnell und sicher wirkenden Strombegrenzung eine beachtenswerte Erhöhung der Netzstabilität.

Vorteilhaft bei dieser Strombegrenzugsvorrichtung ist ihr einfacher Aufbau ohne Wicklungen. Ihre Betriebssicherheit ist dadurch gegeben, daß keinerlei Erfassungs- und Steuerlogik für ihre Funktion benötigt wird. Der einfache, modulare mechanische Aufbau aus einem isolierten, rohrförmigen Stromleiter mit konzentrisch um diesen angeordneten Ringkernen mit zwischen diesen liegenden Dauermagneten ermöglicht eine kurzschlußfeste, kompakte und raumsparende Bauweise bei einfacher Herstellung.

## Bezeichnungen

1 Stromquelle
2 Strombegrenzungsvorrichtung
3 Verbraucher
21 Kommutierungsvorrichtung
22 Schalter
23 Spannungsabhängiger Widerstand (Varistor)
24 Primärstromauslöser
25 Stromwandler
26 Spannungswandler
27 Elektrisch isoliertes Leiterrohr
28.1 Ringkern 1
28.2 Ringkern 2
29.1 Dauermagnet 1
29.2 Dauermagnet 2
30 Magnetischer Rückschluß

## Patentansprüche

1. Strombegrenzugsvorrichtung mit induktiv wirkender Stromableitung zum Begrenzen des von einer Stromquelle (1) zu einem Verbraucher (3) fliessenden Stromes, dadurch gekennzeichnet, daß eine Kommutierungsvorrichtung (21), bestehend aus einer modular aufgebauten und dauermagnetisch vorgesättigten Drosselspule, elektrisch in Reihe zu einem Schalter (22) angeordnet ist, die den zu begrenzenden Strom auf einen parallelen und einen spannungsabhängigen Widerstand (23) enthaltenden Stromkreis kommutiert.

2. Strombegrenzungsvorrichtung gemäß Anspruch 1, dadurch gekennzeichnet, daß die Kommutierungsvorrichtung (21) mindestens ein Kommutierungselement mit einem rohrförmigen, isolierten Stromleiter enthält, der von zwei dauermagnetisch vorgesättigten und ringförmig geschlossenen Eisenkernen (28.1, 28.2) umfaßt wird und zwischen denen mindestens ein Dauermagnet (29.1) und in diametraler Lage dazu ein magnetischer Rückschluß (30) angeordnet sind.

3. Strombegrenzungsvorrichtung gemäß Anspruch 2, dadurch gekennzeichnet, daß zwischen den dauermagnetisch vorgesättigten und ringförmig geschlossenen Eisenkernen (28.1, 28.2) zwei Dauermagnete (29.1, 29.2) mit zueinander entgegengesetzter Polung und in diametraler Lage dazu ein für beide Magnete gemeinsamer magnetischer Rückschluß (30) angeordnet sind.

4. Strombegrenzungsvorrichtung gemäß Anspruch 1, dadurch gekennzeichnet, daß im Parallelkreis elektrisch in Reihe zum spannungsabhängigen Widerstand (23) ein Primärstromauslöser (24) vorgesehen ist, der ein Auslösesignal für den Schalter (22) im Hauptkreis erzeugt und diesen auslöst.

5. Strombegrenzungsvorrichtung gemäß Anspruch 1, dadurch gekennzeichnet, daß im Parallelkreis elektrisch in Reihe zum spannungsabhängigen Widerstand (23) ein Stromwandler (25) vorgesehen ist, der ein Auslösesignal für den Schalter (22) im Hauptkreis erzeugt und diesen auslöst.

6. Strombegrenzungsvorrichtung gemäß Anspruch 1, dadurch gekennzeichnet, daß die im Parallelkreis wirkende Spannung durch einen Spannungswandler (26) erfaßt wird, der ein Auslösesignal für den Schalter (22) im Hauptkreis erzeugt und diesen auslöst.

Fig.1

Fig. 2

Fig. 3

Fig. 4

Fig. 5

Fig. 6

U    V    W

*2*    *2*

R

S

T

Fig.7

*2*    *2*

Fig.8

*2*

Fig.9

Netz 1

*2*

Netz 2

Fig. 10